# EUROPEAN PATENT APPLICATION

(11) **EP 4 596 342 A1**
(43) Date of publication of application: **06.08.2025**
(21) Application number: 25155003.4
(22) Date of filing: 30.01.2025
(51) Int. Cl.: B60T 8/17

(54) **HYBRID HYDRAULIC/ELECTRIC BRAKE CONTROL SYSTEMS FOR AIRCRAFT**

(30) Priority: 30.01.2024 US 202463626680 P; 16.01.2025 US 202519025155
(71) Applicant: Embraer S.A., 12227-901 São José Dos Campos SP (BR)
(72) Inventor: Pontim, Clesio Antonio, 12227-901 São José dos Campos, SP (BR)
(74) Representative: Liesegang, Eva

(57) **Abstract**

Hybrid hydraulic/electric brake control systems for aircraft include port and starboard braking channel units that are configured to provide independent braking control to port side and starboard side main wheel assemblies associated with the aircraft. Each of the port and starboard braking channel units will include (i) a master braking cylinder to provide hydraulic braking pressure to a respective one of the port side and starboard side main wheel assemblies associated with the aircraft by port and starboard hydraulic lines, respectively, (ii) a control drive unit configured to output a brake actuation signal, and (iii) a linear actuator in operative electrical communication with the control drive unit, the linear actuator including an actuator rod mechanically connected to the master braking cylinder to thereby modulate the master braking cylinder in response to the brake actuation signal to provide proportional hydraulic braking force to the respective one of the port side and starboard side main wheel assemblies.

## Description

### CROSS-REFERENCE TO RELATED APPLICATION

This application is based on and claims domestic priority benefits from U.S. Provisional Application Serial No. 63/626,680 filed on January 30, 2024, the entire content of which is expressly incorporated hereinto by reference.

### FIELD

The embodiments disclosed herein relate generally to hybrid hydraulic/electric brake control systems for aircraft. In preferred forms, the embodiments of the invention increase the flexibility of installing a brake system for an aircraft that does not have the minimum requirements to support a conventional aircraft hydraulic braking system, such as on-board pilot-controlled pedals, systems to generate hydraulic pressures and/or adequate space for the hydraulic system. The hybrid hydraulic/electric brake control systems may therefore usefully be installed in autonomous aircraft (i.e., aircraft that that do not have onboard human pilots).

### BACKGROUND

There are conventionally three basic solutions for providing brake systems for aircraft. For example, there are purely mechanical hydraulic braking systems where the foot force of a pilot on a control pedal is used to directly control the braking intensity. This type of mechanical braking system thus depends on the pedal and the presence of a pilot operator. As such, conventional mechanical hydraulic braking systems are not subject to automation.

Another conventional means of providing braking action to aircraft are brake-by-wire systems whereby application of force by a pilot onto the control pedal application is converted into electrical signals that are transferred to a control box which in turn controls a set of hydraulic valves that apply pressure to the respective wheel brake assemblies. Fully electric braking systems are also known whereby several electric actuators, typically operating with higher voltage, are employed that apply braking force directly to the wheel. The fully electric system thus depends on electrical generation not normally available on small aircraft.

While the conventional braking systems for aircraft are suitable for their intended purposes, further improvements and design options are continually desired. For example, it would especially be desirable if aircraft braking systems could be developed which are especially suited for relatively light weight, electric vertical takeoff and landing (eVTOL) and/or autonomous aircraft designs. It is towards fulfilling such needs that the embodiments disclosed herein are directed.

### SUMMARY

Broadly, the embodiments disclosed herein are directed toward novel hybrid hydraulic/electric brake control systems for aircraft. In especially preferred embodiments, the hybrid hydraulic/electric brake control system is operable in response to an electrical brake command signal that is sent electrically to an electrical control unit which in turn controls an electrical/mechanical actuator. The electrical/mechanical actuator in turn responsively applies force and displacement to a hydraulic master cylinder which is proportional to the command signal sent to the electrical control unit. The actuator movement is in turn converted into hydraulic pressure by the hydraulic master cylinder sufficient to actuate the aircraft brakes associated with the aircraft main wheel assemblies. The pressure generated by the hydraulic master cylinder is fed back to the electrical control unit through a pressure sensor to compensate for both internal variables (e.g., play, backlash, non-linearity and the like) and external variables (e.g., temperature, altitude, and the like) to achieve exactly the required braking force that is commanded.

According to preferred embodiments, the hybrid hydraulic/electric brake control system is comprised of two segregated and independently operable port and starboard braking channel units which therefore makes it possible to achieve both symmetrical and asymmetrical braking control. With such a feature it is possible to apply linear brakes (e.g., using symmetrical braking control) and directional control (i.e., using asymmetrical braking control) of the aircraft during ground maneuvering.

The hybrid hydraulic/electric brake control systems of the embodiments disclosed herein may also perform a parking brake function through full command of the electrical/mechanical actuator and the sequential closing of a normally closed solenoid valve, optionally together with an internal locking device associated with the electromechanical actuator, that is also controlled by the control drive unit thereby creating a brake pressure lock. The hydraulic/electric brake control systems of the embodiments disclosed herein are very compact and can be enclosed in a small, sealed container to guarantee two means against leaks, allowing easy installation in any region of the aircraft, such as electrical, avionics, high and low voltage compartments.

The hybrid hydraulic/electric brake control systems of the embodiments as disclosed herein now make it possible to electrically control the brake and parking brake applications of an aircraft with a relatively simple control box, without depending on adjacent resources or systems such as hydraulic generation systems, cable and pulley systems, valves and the like. The hybrid hydraulic/electric brake control systems of the embodiments disclosed herein may also be suitably installed in virtually any on-board environment of the aircraft, such as within areas of the aircraft that are not compatible with flammable fuels.

These and other aspects and advantages of the present invention will become clearer after careful consideration is given to the following detailed description of the preferred exemplary embodiments thereof.

### BRIEF DESCRIPTION OF ACCOMPANYING DRAWINGS

The disclosed embodiments of the present invention will be better and more completely understood by referring to the following detailed description of exemplary non-limiting illustrative embodiments in conjunction with the drawings of which:
FIG. 1 is a schematic x-ray plan view of an aircraft provided with a hybrid hydraulic/electric brake control system according to an embodiment of the invention;
FIG. 2 is an enlarged schematic x-ray plan view of the on-board hydraulic/electrical control assembly that may be employed in the aircraft depicted in FIG. 1; and
FIG. 3 is a cross-sectional elevational view of the port braking channel unit as taken along lines 3-3 in FIG. 2.

### DETAILED DESCRIPTION OF EXEMPLARY EMBODIMENT

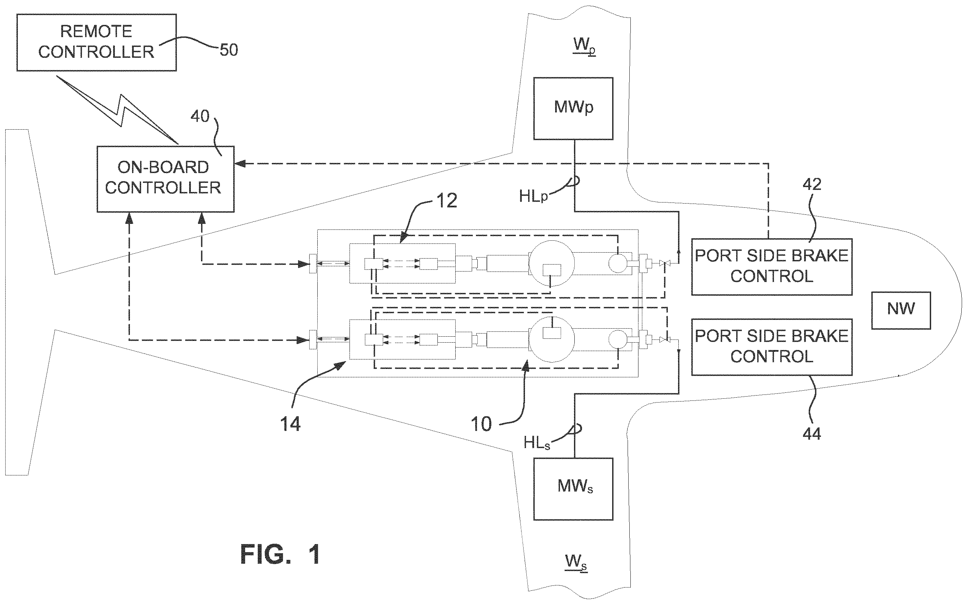

A schematic x-ray plan view of an aircraft AC which includes a hybrid hydraulic/electric brake control system 10 according to an embodiment of this invention is depicted in accompanying FIG. 1. As shown, the aircraft AC conventionally includes port and starboard wings Wp, Ws, respectively, along with a tricycle landing gear arrangement comprised of a nose wheel assembly NW and port and starboard main wheel assemblies MWp, MWs, respectively. The nose wheel assembly NW may be freely castering (i.e., does not have any mechanical or electrical interconnection for steering) while the port side and starboard side main wheel assemblies MWp, MWs, respectively, are operatively interconnected hydraulically via port and starboard hydraulic lines HLp, HLs, respectively, to the port and starboard braking channel units 12, 14 associated with the hybrid hydraulic/electric brake control system 10.

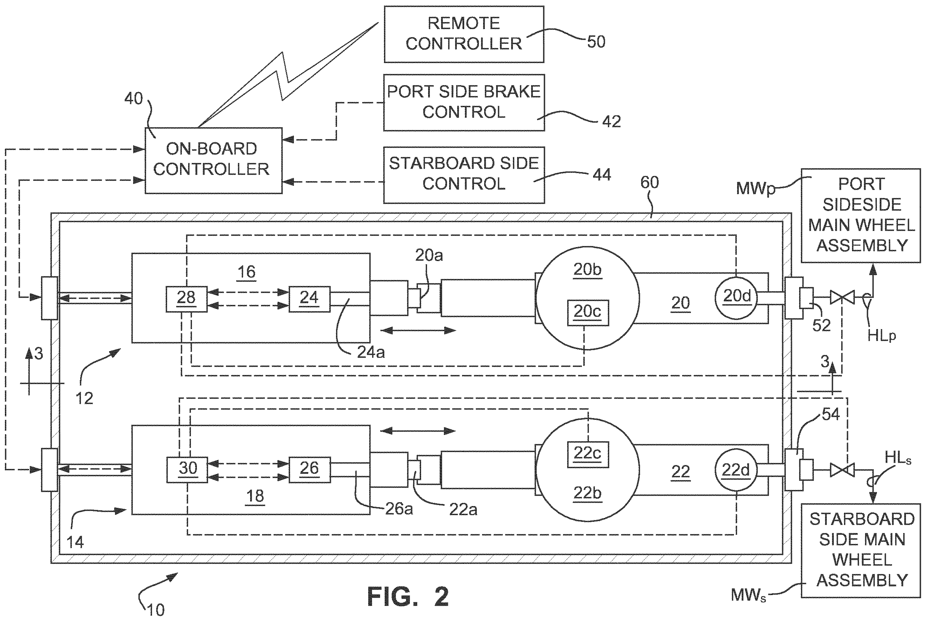

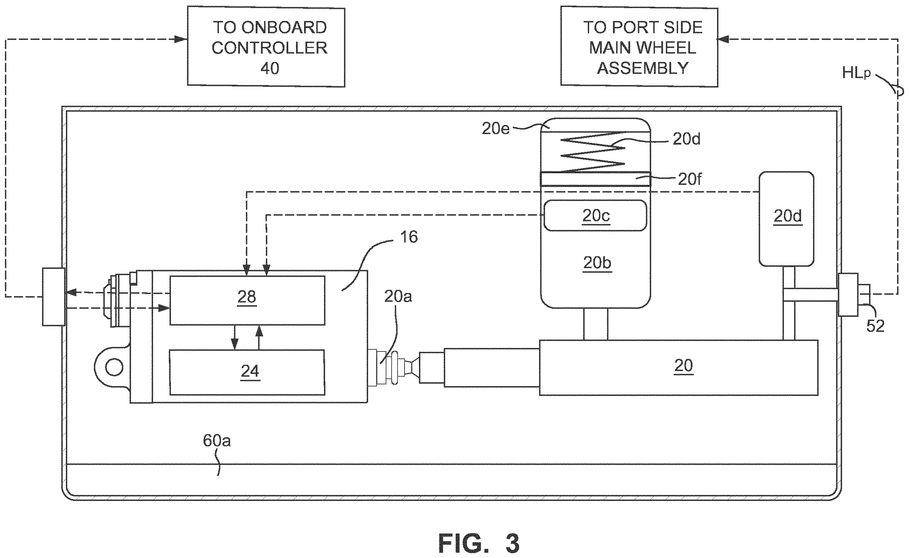

Accompanying FIGS. 2 and 3 are enlarged views of the hybrid hydraulic/electric brake control system 10 wherein FIG. 2 is a schematic x-ray plan view thereof which FIG. 3 is a side elevational view of the port braking channel unit 12. As shown, each of the port and starboard braking channel units 12, 14 includes an electric/mechanical actuator unit 16, 18 operatively interconnected to a brake master cylinder 20, 22 by the actuator rods 24a, 26a associated with linear actuators 24, 26 of the electric/mechanical actuator unit 16, 18, respectively. The linear actuators 24, 26 of the electric/mechanical actuator unit 16, 18 receive brake actuation signals from the control drive units 28, 30. The actuator units will thus convert the brake actuation signal into mechanical linear translation of the control rods 24a, 26a so as to in turn cause the brake master cylinders 20, 22 to apply a braking control force to the port and starboard main wheel assemblies MWp, MWs by means of modulated hydraulic pressure in hydraulic lines HLp, HLs that is proportional to the brake actuation signal, respectively.

Each control drive unit 28, 30 is in operative communication with an on-board controller 40 which in turn receives signal inputs from the port side and starboard side brake controls 42, 44, respectively. In this regard, should the aircraft AC be manned, the port side and starboard side brake controls 42, 44 can be in the form of conventional pedal brake controls or hand brake control switches. However, should the aircraft be unmanned, then the on-board controller 40 will receive control signals wirelessly from a remote controller 50 that may be ground or air based. In response to receiving a control signal (e.g., from the port side and/or starboard side brake controls 42, 44 or from the remote controller 50, the on-board controller 40 will issue a command signal to the respective control drive unit 28, 30 so as to activate the linear actuator 24, 26 which in turn linearly moves the actuator rods 24a, 26b. The actuator rods 24a, 26a will thereby responsively linearly move the associated cylinder plungers 20a, 22a associated with the brake master cylinders 20, 22 thereby applying hydraulic force to the port side and/or starboard side main wheel assemblies MWp, MWs via the hydraulic lines HLp, HLs causing the desired symmetric or asymmetric braking action to occur. In the event that a parking brake function is desired, then the on-board controller 40 can issue a command signal so each of the respective control drive units 28, 30 cause the closing of a normally closed (NC) solenoid valves 52, 54 thereby creating a hydraulic pressure lock when the master cylinders 20, 22 are fully deployed (e.g., exerting maximum hydraulic braking force). Alternatively or additionally, the hydraulic pressure lock may be achieve by activation of an internal locking device associated with the electric/mechanical actuator units 16, 18. In this regard the NC solenoid valves will be signaled to open when the control drive units 28, 30 are operational to provide normal braking control as discussed previously.

Each of the brake master cylinders 20, 22 is provided with a fluid reservoir 20b, 22b that contains a reservoir amount of hydraulic fluid which feeds the respective brake master cylinder 20, 22 to compensate from natural fluid loss (e.g., leakage and/or thermal variations). A float level sensor 20c, 22c is provided within each reservoir 20b, 22b so as to provide a low hydraulic fluid level signal to the control drive unit 28, 30 and hence the on-board controller 40. Such a signal may then be used to provide visual annunciation of a low level hydraulic fluid condition.

A pressure transducer 20d, 22d is also operatively associated with each of the brake master cylinders 20, 22, respectively, which provides a hydraulic pressure feedback signal to the control drive units 28, 30, respectively. The hydraulic pressure feedback signal thereby allows the control drive units 28, 30 to modulate the linear actuators 24, 26 to thereby ensure that the proper hydraulic pressure is applied by the brake master cylinders 20, 22 to the port side and starboard side main wheel assemblies MWp, MWs via the hydraulic lines HLp, HLs, respectively.

The port and starboard braking channel units 12, 14 may be contained within a fully sealed leak-proof enclosure 60 which prevents hydraulic fluid leakage should it occur. In order to ensure that the hybrid hydraulic/electric brake control system 10 can be oriented in virtually any position within the aircraft AC where space will allow, there are provided pre-pressurization springs located within the hydraulic reservoirs 20b, 22b. By way of example, FIG. 3 schematically shows a spring 20d positioned between a reservoir cap 20e and a fluid piston 20f within the hydraulic reservoir 20b. The reservoir cap 20e, spring 20d and fluid piston 20f are assembled as a single unit so that when the cap 20e is removed, the spring 20d and piston 20f are removed together. When the hydraulic reservoir 20b is capped by the unit, the capping method will compress the spring thereby pre-pressurizing the hydraulic fluid through the fluid piston 20f. A similar arrangement could be provided for the hydraulic reservoir 22b. The enclosure 60 may also include a bottom tray 60a that will assist in preventing leakage of hydraulic fluid should that occur.

While reference is made herein to particular embodiments of the invention, various modifications within the skill of those in the art may be envisioned. Therefore, it is to be understood that the invention is not to be limited to the disclosed embodiment, but on the contrary, is intended to cover various modifications and equivalent arrangements included within the spirit and scope thereof.

## Claims

1. A hybrid hydraulic/electric brake control system for an aircraft comprising:
a port braking channel unit, and
a starboard braking channel unit, wherein
the port and starboard braking channel units are configured to provide independent braking control to port side and starboard side main wheel assemblies associated with the aircraft, and wherein
each of the port and starboard braking channel units comprises:
(i) a master braking cylinder to provide hydraulic braking pressure to a respective one of the port side and starboard side main wheel assemblies associated with the aircraft by port and starboard hydraulic lines, respectively,
(ii) a control drive unit configured to output a brake actuation signal, and
(iii) a linear actuator in operative electrical communication with the control drive unit and including an actuator rod mechanically connected to the master braking cylinder, the linear actuator configured to receive the brake actuation signal from the control drive unit and convert the brake actuation signal into mechanical translation of the actuator rod to thereby cause the master braking cylinder to provide proportional hydraulic braking force to the respective one of the port side and starboard side main wheel assemblies.

2. The hybrid hydraulic/electric brake control system according to claim 1, wherein the master braking cylinder of each of the port and starboard braking channel units comprises a fluid reservoir which is fluid-connected to the master braking cylinder.

3. The hybrid hydraulic/electric brake control system according to claim 2, wherein the fluid reservoir includes a float switch that issues a hydraulic fluid level signal which is received by the control drive unit.

4. The hybrid hydraulic/electric brake control system according to claim 2 or 3, wherein the fluid reservoir is spring-pressurized.

5. The hybrid hydraulic/electric brake control system according to one of the preceding claims, further comprising a pressure transducer in fluid communication with the master braking cylinder, the pressure transducer issuing a hydraulic pressure feedback signal to the control drive unit.

6. The hybrid hydraulic/electric brake control system according to one of the preceding claims, further comprising a leak proof enclosure which fully encloses the port and starboard braking channel units.

7. The hybrid hydraulic/electric brake control system according to claim 6, wherein the enclosure comprises a bottom tray for receiving hydraulic fluid leakage from the master braking cylinder.

8. An aircraft comprising:
port and starboard main wheel assemblies which include respective braking systems; and
the hybrid hydraulic/electric brake control system according to one of the preceding claims, wherein
the master braking cylinder of each of the port and starboard braking channel units is operatively connected to a respective one of the braking systems of the port and starboard main wheel assemblies by the port and starboard hydraulic lines, respectively.

9. The aircraft according to claim 8, further comprising:
on-board manually operable port and starboard brake controls issuing respective port and starboard brake control signals; and
an on-board controller which receives the port and starboard brake control signals from the manually operable port and starboard brake controls and issues respective command signals to the port and starboard control drive units, respectively.

10. The aircraft according to claim 8 or 9, further comprising an on-board controller which wirelessly receives port and starboard brake control signals from a remote controller and responsively issues respective command signals to the port and starboard control drive units.
